# EUROPEAN PATENT SPECIFICATION

(11) **EP 4 016 876 B1**
(45) Date of publication and mention of the grant of the patent: **21.10.2026**
(21) Application number: 20215069.4
(22) Date of filing: 17.12.2020
(51) Int. Cl.: H04B 10/118

(54) **ACQUIRING BI-DIRECTIONAL OPTICAL LINKS BETWEEN DISTANT TRANSCEIVERS**
ERFASSEN VON BIDIREKTIONALEN OPTISCHEN VERBINDUNGEN ZWISCHEN ENTFERNTEN SENDEEMPFÄNGERN
ACQUISITION DE LIAISONS OPTIQUES BIDIRECTIONNELLES ENTRE ÉMETTEURS-RÉCEPTEURS DISTANTS

(43) Date of publication of application: 22.06.2022
(73) Proprietor: Airbus Defence and Space GmbH, 82024 Taufkirchen (DE)
(72) Inventor: Hechenblaikner, Gerald, 82024 Taufkirchen (DE); Delchambre, Simon, 82024 Taufkirchen (DE); Ziegler, Tobias, 82024 Taufkirchen (DE)
(74) Representative: LKGLOBAL Partnerschaftsgesellschaft mbB

(56) References cited:
- US-A1- 2015 215 040
- US-B1- 6 195 044
- POPESCU A F ET AL: "LABORATORY MODEL OF A BIDIRECTIONAL DIODE LASER DATA LINK WITH ACQUISITION AND TRACKING CAPABILITY", OPTICAL SYSTEMS FOR SPACE APPLICATIONS. THE HAGUE, 30 MAR. - 1 APR., 1987; [PROCEEDINGS OF SPIE], WASHINGTON, SPIE, US, vol. VOL. 810, no. 1987, 30 March 1987 (1987-03-30), pages 239 - 244, XP000041305

## Description

### Technical Field

The present description relates to a method for acquiring a bi-directional optical link between a first transceiver and a second transceiver that are spaced apart from each other. The description further relates to an optical data transmission system that that is composed of two or more optical transceivers and a ground station.

### Technical Background

Optical data links are established between two stations to transmit data and/or to perform interferometry in either direction (unidirectional) between the two stations or bi-directional between said stations. In order to establish the optical connection, the stations and/or the transmitting and receiving units (transceivers) need to be oriented towards each other so that the sending unit of the one station sends the optical data carrier towards the receiving unit of the other station, and vice versa. An optical data link typically requires a direct optical connection between the stations and the sending/receiving units being oriented towards each other.

Optical connections may be utilized for establishing connections between stationary stations that are arranged on earth, between one stationary station on earth and one mobile station like an aircraft, spacecraft, or satellite, or between two mobile stations (aircraft, spacecraft, satellite). When one station is a mobile station, this may require that at least one of the stations has transceiver unit that can be adjusted to follow the path of movement of the mobile station.

An example of using an optical data link and an approach for adjusting the optical beam between two stations that are interconnected by an optical link is described in DE 10 2017 127 813 A1.

US 6 195 044 B1 describes a laser crosslink attitude determination system that uses the payload crosslinks as the principal attitude sensor without using dedicated and additional celestial body or inertial sensors to provide attitude information. The method and system described in this document establish optical crosslinks among orbiting spacecraft for attitude control by performing a series of deterministic scans.

Popescu, A. F. et al.: "Laboratory Model of a Bidirectional Diode Laser Data Link with Acquisition and Tracking Capability", Optical Systems for Space Applications, The Hague, 30 March - 1 April 1987 describes a laboratory model of a bidirectional semiconductor laser data link package with acquisition and tracking capability. The system consists of two independent transceivers spaced at a distance of 20m. The transceivers are built around a GaAlAs-laser (λ = 0,85µm) and a Ge-photodiode in one case and a n InGaAsP-laser (λ = 1,3µm) and Si-detectors in the second case. The 0,85µm beam carries a 10 Mbit/s data stream, while the 1,3mm beam transmits a low-data-rate signal at 160kbit/s. One transceiver is mounted on a test jig which permits transverse movement over an area of 1m x 1m. At a transmitted optical power level of 0,5mW reliable data transmission (BER<10⁻⁹), pointing, acquisition (T_{acquisition} < 10s) and tracking are demonstrated.

### Description

It may be considered an object to increase the efficiency of the acquisition process of an optical link between two distant transceivers.

This object is achieved by the subject-matter of the independent claims. Further embodiments can be derived from the dependent claims and the following description.

The invention is defined by claim 1.

The method described herein can be used to establish a direct link optical connection between two distant transceivers. In order to establish an optical link, the respective beam emitting unit and the acquisition sensor that are supposed to acquire an optical link and that are located at different and spaced apart transceivers need to be oriented towards each other, i.e., the beam emitting unit needs to point towards the acquisition sensor, while the acquisition sensor needs to be oriented towards the beam emitting unit. A bi-directional link consists of two pairs of beam emitting unit and acquisition sensor that are arranged at different positions between which the bi-directional optical link needs to be established, i.e., each station comprises a beam emitting unit and an acquisition sensor so that a sending/receiving channel in either direction between the two stations can be established.

The beam emitting unit that emits the beam used for acquiring the optical link may be the same as the beam emitting unit that emits the beam used for transmitting data to the other transceiver. Alternatively, it may be a different one.

. Similarly, the acquisition sensor may be the sensor that is configured to receive the data sent during optical communication, i.e., the acquiring sensor also may implement the function of receiving the optical data. Alternatively, the acquisition sensor may be a dedicated acquisition sensor that is used for the acquisition process only.

Once the optical link between the first and second transceiver is acquired, data can be transmitted in either direction. For this purpose, any known technology for optical data transmission may be used. The acquisition process is particularly initiated between two distant transceivers that do not know the exact relative position with respect to each other. Given that scenario, the transceivers first need to mutually discover the other transceiver's position to adjust their own beam emitting direction towards the other transceiver. The acquisition process described herein is particularly useful when executed for transceivers that are in earth orbit or in outer space.

Particularly, there is a certain period in time during which both, the first and second beam emitting unit, emit their optical beam. In other words, the first beam emitting unit emits a first optical beam and aims to be detected by the second acquisition sensor while at the same time, the second beam emitting unit emits the second optical beam and aims to be detected by the first acquisition sensor. In general, both beam emitting units vary their orientation in order to move the transmitted beam within a certain angular region where the respectively other transceiver is expected to be. As soon as an acquisition sensor of one of the transceivers has detected an optical beam, it determines the relative angular position of the source of the detected optical beam, wherein the relative angular position may be defined by two angles like azimuth and altitude with respect to the acquisition sensor. When at least one transceiver has detected an optical beam, this transceiver can be oriented towards the source of the detected optical beam such that it emits its own optical beam towards the detected source to allow the other transceiver to detect it as well and change its orientation accordingly. When both transceivers are oriented towards each other, or at least the optical emitters and the acquisition sensors are oriented towards each other, a bi-directional optical link has been established between the first and second transceiver. This approach for establishing the bi-directional optical link between two remote transceivers increases the time efficiency of the process of establishing the optical link as both beam emitting units emit their optical beam at least partially during the same period of time. This increases the probability that one of the acquisition sensors detects the other station within a given time compared to a scenario where only one station emits an optical beam towards the other station, while the other station only receives the optical beam (i.e., it acts as a passive receiver) and then only changes its orientation to transmit a beam towards the source of the acquired optical beam.

The beam emitting units don't need to start emitting the optical beam at the same time. They may do so, but it is not a necessary requirement. However, according to the approach described herein, there is a certain period of time during which both transceivers emit the optical beam. In other words, the second beam emitting unit emits its optical beam while the first beam emitting unit does the same. The second beam emitting unit may start emitting its optical beam after the first beam emitting unit has done so but before the first beam emitting unit ends doing so, and vice versa. The second beam emitting unit may end emitting its optical beam before the first beam emitting unit has done so or after the first beam emitting unit ends doing so, and vice versa. However, there is at least a certain period of time during which both beam emitting units emit the optical beam so that also both acquiring sensors are able to detect the position of the other station.

Varying the first and second direction and orienting the transceiver unit towards the source coordinates of the other station may be an iterative process that is repeated until the first beam emitting unit and the second acquisition sensor are oriented towards each other and the second beam emitting unit and the first acquisition sensor are oriented towards each other. However, it should be noted that this may generally not be required if the incident beam is detected on the acquisition sensor with sufficient angular resolution to enable the receiving transceiver to orient itself accurately to the angular position of the remote emitter.

The acquired optical link may be used to exchange data between the first transceiver and the second transceiver or to perform interferometry using optical signal(s) transmitted via the optical links.

According to an embodiment, the first beam emitting unit and the second beam emitting unit are activated at the same time.

For example, the acquiring process (which includes activating the beam emitting units) may be initiated by an external unit that has already an established data connection to the transceivers. The external unit may be a ground station. The ground station sends a command to the transceivers to start the acquisition process during which a direct bi-directional optical link is established between the transceivers which are then able to transmit data or perform interferometry via the direct optical link.

For example, the transceivers may be spacecraft or satellites that include certain scientific instruments and apparatus. Data for operating these instruments and/or results from operating these instruments may be transmitted via the optical link between the transceivers.

When the first direction of the first beam emitting unit is varied, a center field-of-view of the first acquisition sensor is varied so that the optical axis defining the center field-of-view of the first acquisition sensor is parallel to the direction of the first optical beam emitted by the first beam emitting unit.

Thus, the acquisition sensor is oriented in the same direction as the beam emitting unit. In other words, the center field-of-view of the acquisition sensor corresponds to the direction in which the optical beam is sent out by the beam emitting unit. Thus, when the optical beam of a first transceiver is detected by the other transceiver and the other transceiver emits its optical beam towards the source of the detected optical beam, i.e., towards the first transceiver, the acquisition sensor of the first transceiver will detect the optical beam emitted by the other transceiver. The beam emitting unit and the acquisition sensor may be mechanically coupled to each other or, generally, may be moved in a co-linear manner.

The field-of-view covered by the first acquisition sensor is at least twice as large as the uncertainty region in angular space where the second transceiver is expected to be, and vice versa for the second acquisition sensor.

Thus, the so-called footprint of the beam (the covered field-of-view) covers the entrance aperture of the remote transceiver, i.e., some light of the transmitted beam enters the entrance aperture of the remote transceiver optics and is imaged by its acquisition sensor. The direction of the received beam falls within the field-of-view of the acquisition sensor. According to the invention, the uncertainty region is defined as the region within which the remote transceiver is found with a certain probability. Said certain probability is 3 Sigma (99,73%).

According to a further embodiment, the first search pattern and the second search pattern are predetermined identical patterns.

For example, the direction of the optical beams may be varied so that the emitting direction follows an Archimedean spiral, a Galilean spiral, any kind of synthetic spiral, a rectangle-like pattern, or any other search pattern that is followed by the emitting direction of the optical beams.

The search patterns implemented by the involved transceivers may be identical or different.

According to a further embodiment, at least one of the first search patterns and the second search pattern are followed by the respective optical beam so that an area covered by the optical beam at a certain point, when its center follows the path of the search pattern, partially overlaps with another area covered by the optical beam when following an adjacent track of the search pattern.

Thus, as the areas covered by the optical beam when following adjacent tracks of the search pattern partially overlap, the optical beam searches and covers a region without leaving any gaps between the tracks of the optical beam.

According to a further embodiment, the step of varying the first direction of emitting the first optical beam and the second optical beam comprises rotating the respective beam emitting unit about two rotational degrees of freedom.

The beam emitting units may be mounted on a support element that has two rotational degrees of freedom. The acquisition sensor may be mounted to the same support element, so that the beam emitting unit and the associated acquisition sensor are both moved in the same direction when the support element (e.g., a base plate or mounting plate, or the like) is moved by an actuator.

In one variant, the step of varying the first direction of emitting the first optical beam and the second optical beam comprises rotating the respective transceiver platform (e.g., a spacecraft) about two rotational degrees of freedom.

In another variant, the step of varying the first direction of emitting the first optical beam and the second optical beam comprises rotating the respective transceiver platform (e.g., a spacecraft) about one rotational degree of freedom and the transceiver itself about one rotational degree of freedom.

According to a further embodiment, the first transceiver and/or the second transceiver comprises two distinct transceiver units, wherein each transceiver unit comprises a beam emitting unit and an associated acquisition sensor, wherein the method further comprises the step of independently varying the direction of the beam emitting units of the two transceiver units to acquire two different optical links to two different remote stations.

For example, the transceiver can be used as a relay station to transmit data between two transceivers that do not have a direct connection between each other. Alternatively, multiple transceivers may comprise two (or more) distinct transceiver units so that each transceiver establishes a direct optical connection to (at least) two other transceivers to allow for different configurations, e.g., a chain of optical connections between multiple transceivers or a network.

It is noted that the acquisition sensor of the transceiver may be a dedicated acquisition sensor that is used only for acquiring the optical link between two transceivers. Once the beam emitting units of two transceivers are oriented towards the other transceiver, another optical receiving sensor may be used to receive the data transmitted via the optical link. In such a configuration, the acquisition sensor may have another configuration as the receiving sensor. In particular, the acquisition sensor may have a wide field of view in order to be able to detect optical beams originating from a large angular field. The receiving sensor may have a narrower field of view than the acquisition sensor.

According to an aspect related to the invention, an optical data transmission system, not included in the appended claims, is provided that comprises a ground station, a first transceiver, and a second transceiver. Each transceiver comprises a transceiver unit with a support element, a beam emitting unit, and an acquisition sensor, wherein the beam emitting unit and the acquisition sensor are mounted to the support element. The ground station is configured to establish a data link to each one of the first transceiver and the second transceiver. The ground station is further configured to initiate an acquisition process for establishing a bi-directional optical link between the first transceiver and the second transceiver, wherein the first transceiver and the second transceiver are configured to carry out the following functions during the acquisition process: emit an optical beam at least partially during the same period of time and vary the emitting direction in accordance with a predetermined search pattern; acquire source coordinates of an optical beam that is incident onto the acquisition sensor; move the acquisition sensor towards the coordinates of a source of the incident optical beam and emit the optical beam towards the source of the incident optical beam. A field-of-view covered by the first acquisition sensor is at least twice as large as the uncertainty region in angular space where the second transceiver is expected to be.

Particularly, the ground station and the transceivers are configured to carry out the method described above and hereinafter. Especially, the first and second transceivers carry out the same functions: they emit an optical beam towards a starting point of a suspected region of the other transceiver (and move the optical beam in accordance with a search pattern) and acquire for an incident optical beam that is emitted by the other transceiver. As soon as one of the transceivers detects an incident optical beam with its acquisition sensor, this transceiver moves its own optical beam towards the source of the detected incident optical beam.

Thus, the transceivers can establish a bi-directional optical link for transmitting data via an optical signal in both directions between the first and second transceivers. When the acquisition process has finished, the beam emitting unit and the acquisition sensor are oriented towards each other to allow data transmission in both directions.

The data link between the ground station and the transceivers may be any wireless RF data link. For example, the ground station may follow the moving path of the transceivers. Therefore, a respective antenna of the ground station may follow and be directed towards each of the transceivers so that data can be transmitted between the ground station and the transceivers. However, the optical link is acquired and established between the transceivers to enable direct data transmission between the transceivers without the ground station in between.

In some variants, the ground station may also communicate position data or orbit prediction data to the remote transceivers. These data are used by the first transceiver to point itself roughly in the right direction towards the second transceiver with which it wants to communicate or acquire the optical link. The remaining residual uncertainty of the position of the second transceiver is then to a large part due to attitude errors of the first transceiver and an orientation error of the beam emitting unit of the first transceiver with respect to its nominal orientation within the first transceiver. The position data of the transceivers are determined by the ground station from ranging data for the RF link connecting the ground station with the transceiver.

In some variants, the ground station may also communicate to each transceiver position and orbit prediction data of all transceivers to support the initial orientation of the transceivers during acquisition. The ground station may also use the available RF links to determine positions and orbit prediction data for all transceivers.

According to an embodiment, the system comprises a third transceiver, wherein the first transceiver, the second transceiver, and the third transceiver are configured for use in a set of three heliocentric orbits and for maintaining an equilateral triangular formation.

According to a further embodiment, the first transceiver and the second transceiver are communication satellites that are configured for use in an earth orbit and wherein the bi-directional optical link is configured for data transmission between the first transceiver and the second transceiver while in orbit.

According to a further embodiment, the support element is rigidly attached to the respective transceiver, so that the emitting direction of the optical beam is varied by changing the spatial orientation of the respective transceiver; or the support element is movable with respect to the respective transceiver by an actuator, so that the emitting direction of the optical beam is varied by changing the orientation of the support element with respect to the transceiver; or the support element is movable with respect to the respective transceiver by an actuator about one degree of freedom, so that the emitting direction of the optical beam is varied by changing the orientation of the support element with respect to the transceiver about one degree of freedom and changing the spatial orientation of the respective transceiver by another degree of freedom.

According to a further embodiment, the system comprises a plurality of transceivers, wherein each transceiver comprises two transceiver units which are movable independently of each other so that each transceiver is configured to establish two separate bi-directional optical links with two different other transceivers of the plurality of transceivers.

According to a further embodiment, the ground station is configured to initiate the acquisition process for all transceiver units of all transceivers at the same time.

### Brief description of the drawings

In the following, exemplary embodiments are described with reference to the drawings. The illustrations shown in the drawings are schematic and not to scale. Same or similar reference signal refer to same or similar elements.
- Fig. 1: shows a schematic illustration of a first transceiver and a second transceiver;
- Fig. 2: shows a schematic illustration of a first transceiver and a second transceiver at different relative positions and orientations;
- Fig. 3: shows a schematic illustration of a first transceiver with its components;
- Fig. 4: shows a schematic illustration of a first transceiver with two transceiver units;
- Fig. 5: shows a schematic illustration of a plurality of transceivers that are interconnected by bi-directional optical links to form a chain;
- Fig. 6: shows a schematic illustration of a search pattern for establishing an optical link;
- Fig. 7: shows a schematic illustration of another search pattern for establishing an optical link;
- Fig. 8: shows a schematic illustration of an optical data transmission system with a ground station and multiple transceivers.

### Detailed description of embodiments

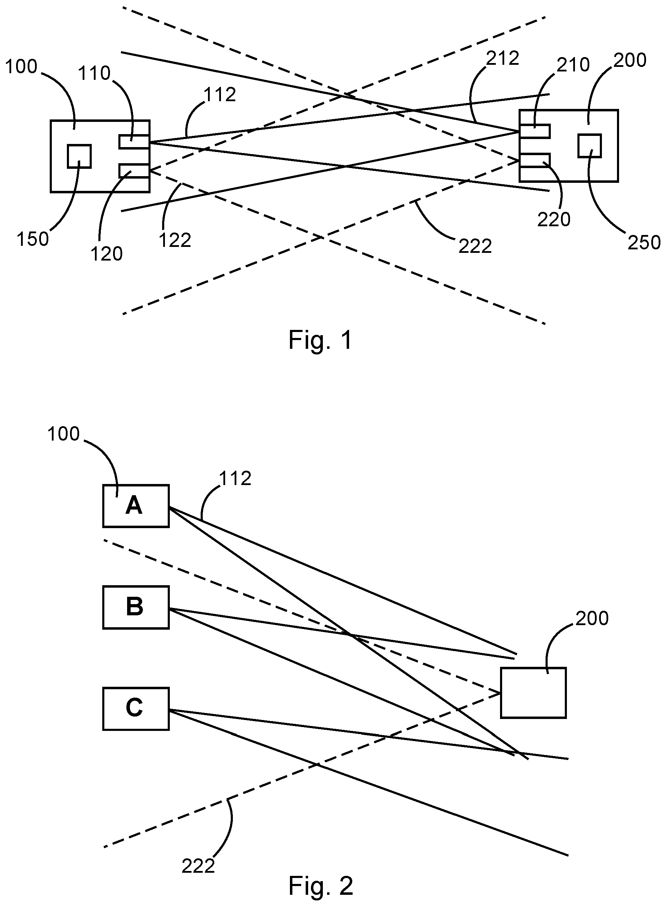

Fig. 1 shows a first transceiver 100 and a second transceiver 200 that are arranged opposite to each other and facing each other. The transceivers 100, 200 are referred to for describing the relevant functions and components of the transceivers for the purpose of the present description. In the example of Fig. 1, the transceivers 100, 200 are satellites or spacecraft that are in an earth orbit or in a solar orbit and require an optical connection being established between the transmitters for enabling transmission of data between the transceivers. It is noted that the present description focusses on the process for acquiring the optical connection while the transmission of the signals and processing of the signals and of the transmitted data is not described in detail. Therefore, any known data transmission schemes (signal coding, modulation, etc.) may be used and any data processing may be done with the transmitted using without limiting the scope of the present description.

Generally, the first transceiver 100 and the second transceiver 200 may comprise same or similar components for establishing and transmitting data via the optical link. Each transceiver 100, 200 comprises a beam emitting unit 110, 210, an acquisition sensor 120, 220, and a controller 150, 250. The beam emitting unit 110, 210 is configured to emit an optical beam 112, 212 in a predetermined direction that is defined by the orientation of the transceiver 100, 200 or the orientation of the beam emitting unit 110, 210. The acquisition sensor 120, 220 is configured to detect and acquire the optical beam 112, 212 that is incident onto the acquisition sensor. The acquisition sensor 120, 220 has an acquisition field-of-view 122, 222. An optical beam that is incident onto the acquisition sensor can only be acquired when the source of the optical beam is located within the acquisition field-of-view 122, 222 and when said optical beam is directed towards the acquisition sensor (this will be described in more detail with regard to Fig. 2).

Before data can be transmitted via the optical link between the first transceiver 100 and the second transceiver 200 (in either direction or in both directions), the optical link needs to be established/acquired. Thus, one might distinguish between an acquisition phase and a data transmission phase. The beam emitting unit 110, 210 and the acquisition sensor 120, 220 may be used for establishing the optical link during the acquisition phase and the same components may also be used for transmitting data (i.e., optical signals) during the data transmission phase. However, in an alternate embodiment, during acquisition phase and data transmission phase, different beam emitting units and/or acquisition sensors may be used, so that the respective components may be designed for the specific needs for acquisition and data transmission, respectively.

Before data can be transmitted between the first and second transceiver 100, 200, the optical link needs to be acquired between the distant transceivers 100, 200. For the purpose of illustration, we may assume that (a) each transceiver 100, 200 transmits an optical beam 112, 212 towards an expected or assumed position of the other transmitter, and (b) each transceiver 100, 200 is able to detect the beam transmitted towards it, if the beam is received within a certain field-of-view 122, 222.

Each transmitter is assumed to know its own attitude with a certain error Eₐ and the position in angular space of the remote receiver with a certain error Eₚ. Therefore, when a transceiver 100, 200 orients itself to point towards the expected position of the other transceiver, the emitted optical beam 112, 212 will probably miss the remote transceiver due to its overall pointing error. A so-called "uncertainty cone" is defined by the combined contribution of all sources of pointing errors. The remote transceiver is located somewhere within said uncertainty cone, as seen by the other transceiver aiming to direct its beam towards it.

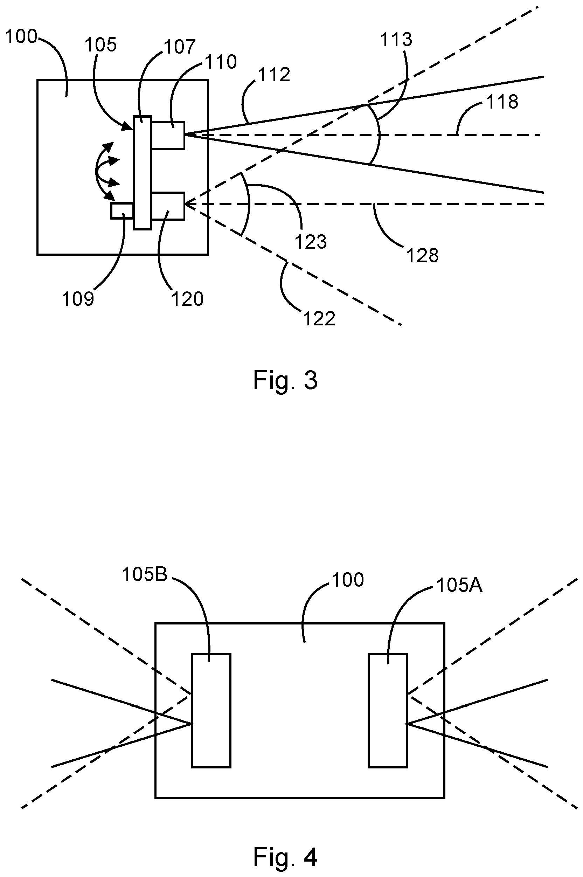

The distance between the two transceivers is assumed to be large (from a few thousands of kilometres up to a few millions of kilometres) so that the angular width (opening angle 113 of the optical beam 112, see Fig. 3) of the transmitted beam only covers a small fraction of the uncertainty cone.

Fig. 2 shows the first transceiver 100 at three different relative positions A, B, C with respect to the second transceiver 200 (also called remote transceiver). The remote transceiver 200 is only able to detect the transmitted optical beam 112 from the first transceiver 100 if two conditions are fulfilled: (a) the remote transceiver 200 is hit by the transmitted beam 112, i.e., it is located within an angular region that is covered by the angular width of the transmitted beam 112; (b) the incidence angle of the transmitted beam 112 received by the remote transceiver 200 is within the acquisition field-of-view 222 (FoV) of the remote transceiver 200.

Fig. 2 gives a two-dimensional representation of three possible orientations of the first transceiver 100 with respect to the second transceiver 200, each of which are indicated by letters A, B, and C. In scenario A, the second transceiver 200 cannot detect the first transceiver 100 because the first transceiver is located outside the acquisition field-of-view 222, in spite of the second transceiver 200 being located within the opening angle of the optical beam 112, wherein the opening angle may also be referred to as divergence angle of a laser beam. In scenario B, the second transceiver 200 can detect the first transceiver 100 because the first transceiver is located within the acquisition field-of-view 222 and the second transceiver 200 is located within the opening angle of the optical beam 112. In scenario C, the first transceiver 100 is located within the acquisition range 222 but cannot be detected because the second transceiver 200 is located outside the optical beam 112 of the first transceiver 100.

The first transceiver 100 can only be detected by the second transceiver 200 when the second transceiver 200 is located within the angular region covered by the beam 112 and the first transceiver 100 is within the field-of-view 222 of the second transceiver 200.

An optical link is called "acquired", if a transceiver detects the optical beam of the other transceiver. A bi-directional optical link is called "acquired" when the first transceiver 100 detects light from the second transceiver 200 and the second transceiver 200 detects light from the first transceiver 100. A bi-directional optical link may comprise two optical signal carriers in either direction between two transceivers.

The method for acquiring an optical link between two transceivers can be accomplished in a shorter time and with higher robustness against external perturbations than other methods that have been suggested before.

Fig. 3 shows a schematic overview of a transceiver 100. The transceiver 100 may comprise a housing that is not explicitly shown. However, the components of the transceiver are all arranged at or within the housing. The transceiver 100 comprises a transceiver unit 105 with a support element 107 (like a plate or a mounting base). The transceiver 100 further comprises a beam emitting unit 110 and an acquisition sensor 120, both of which are mounted to the support element 107. The support element 107 is movable with two degrees of freedom, as indicated by the curved arrows. Particularly, the support element 107 is movable with two rotational degrees of freedom. The transceiver unit 105 may further comprise an actuator 109 that is arranged to move the support element 107.

As can be derived from Fig. 3, the optical beam 112 has an opening angle 113 with a central axis 118 and the acquisition field of view 122 has an opening angle 123 with a central axis 128, wherein the opening angle 123 is greater than the opening angle 113 and the central axes 118 and 128 are parallel to each other. When the actuator 109 moves the support element 107, the beam emitting unit 110 and the acquisition sensor 120 are moved so that the central axes 118, 128 are parallel to each other and remain in this relative orientation.

Each transceiver may be able to steer the direction of each of its transmitted beams 112 in two angular degrees of freedom. The emitted beams may be controlled independent of each other when a transceiver comprises more than one transceiver unit. This allows them to direct the beam towards the expected angular position of the other transceiver or to perform a scan of the uncertainty region.

Each transceiver comprises an acquisition sensor 120 with a Field-of-View (FoV) that is at least twice as large as the uncertainty region defined by the pointing errors. In general, each transceiver may not only have an acquisition sensor but also other detection optics with a smaller field-of-view, allowing it to process the received light for whatever the main purpose of the link is (e.g., data exchange, or interferometry).

The acquisition sensor field-of-view is at least twice as large as the uncertainty region that is being scanned. Due to the fact that both transceivers perform a scan at the same time, this enables that if either of the two transceivers is "hit" by the transmitted beam of the other transceiver at any point during the scan of the uncertainty region, the incidence angle of the received beam is always within the field-of-view of the acquisition sensor. Thus, the received beam can be detected by the sensor.

Each transceiver may be able to centre its acquisition sensor field of view on the direction of its transmitted beam 112 (except for a small angular offset that is negligible compared to the width of the uncertainty region).

Some of these requirements may be accomplished by changing the relative orientation of the complete transceiver system with respect to the other. For example, the transceiver system could be a satellite which rotates around two axes in order to steer the transmitted beam and change the field on sky seen by the acquisition sensor. Alternatively, the transceiver system could remain static while the transmitted beam and the acquisition sensor field are pointed to the required direction by a dedicated mechanism and the actuator 109. Alternatively, the transceiver system could rotate about one degree-of-freedom and the transmitted beam and the acquisition sensor field could rotate about another degree-of-freedom to the required direction by a dedicated mechanism and the actuator. The acquisition sensor 120 of each transceiver may be able to measure the angular offset of the detected light from its pointing direction for the two angular degrees of freedom. This can be accomplished by use of a matrix detector (CCD) or any other sensor type that provides angular resolution of the detected light. In order to retrieve the angular position from the sensor with sufficient accuracy, it is required that sufficient light is received by the sensor during the short integration period while the transmitted beam scans over the position of the receiver in the acquisition process.

Fig. 4 shows another exemplary embodiment of a transceiver 100. Compared to the transceiver 100 shown in Fig. 3, the transceiver 100 of Fig. 4 comprises two transceiver units 105A, 105B so that it can establish two optical links to different remote transceivers. The transceiver units 105A, 105B can be controlled and moved independent of each other.

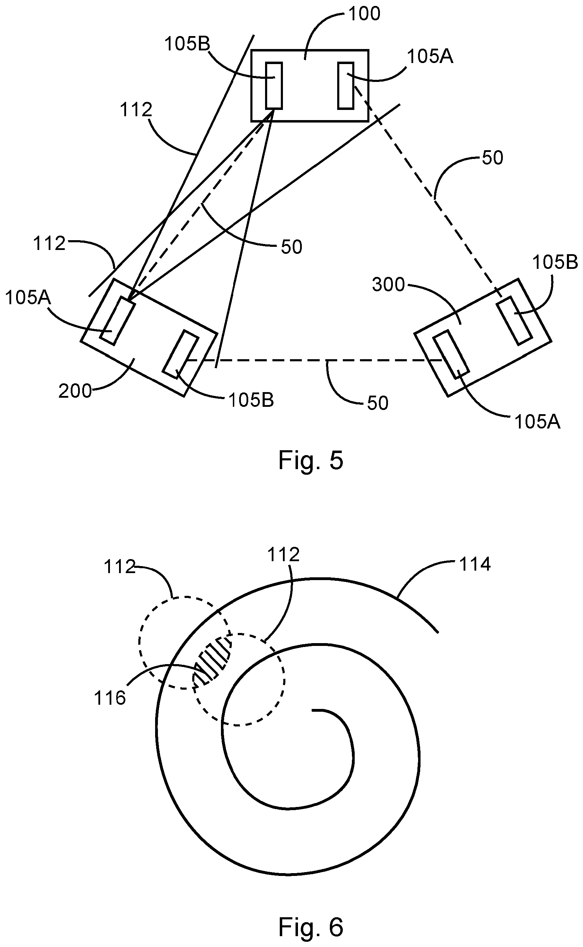

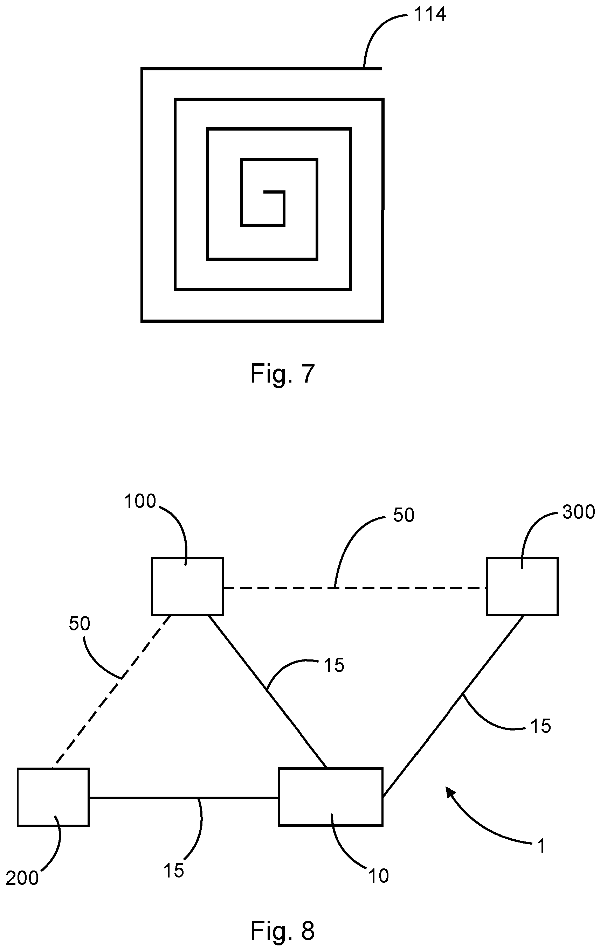

The controller 150 (see Fig. 1) is configured to instruct the transceiver unit(s) 105, 105A, 105B to acquire an optical link as set out herein. In one embodiment, the controller instructs the transceiver units to execute the following steps:
a) Both transceiver units 105 that are located at different transceivers 100, 200 and that are supposed to establish an optical link 50 between these transceivers start simultaneously scanning the uncertainty cone defining the area of uncertainty in angular space of the other transceiver.
b) The scan follows a predetermined search pattern around the centre of the uncertainty cone. Such a pattern could be defined by an Archimedean spiral, or any other pattern, two of which are shown in Figs. 6 and 7. It is also possible to choose a hexagonal or a rectangular pattern, or another symmetric pattern.
c) The track width (distance between two adjacent/neighbouring track segments of the search pattern) of the search pattern in the angular plane is chosen to be slightly smaller than the angular width of the optical beam. This gives full areal coverage of the uncertainty region and ensures that the transmitted beam "hits" the remote receiver at some point during the scan.
d) As soon as either of the two transceivers detects the beam transmitted from the other transceiver on its acquisition sensor, it stops its search scan and re-orients its acquisition sensor and transmitted beam to point towards the detected angular position of the received beam.
e) The other transceiver then detects the transmitted beam (from the transceiver that has just re-oriented itself) on its acquisition sensor, stops its search scan, and re-orients its acquisition sensor and transmitted beam to point towards the detected angular position of the received beam.
f) The two optical links between the two transceivers have now been acquired. At this point, the transmitted beam from the first transceiver 100 is centred on the second transceiver 200 and the transmitted beam from the second transceiver 200 is centred on the first transceiver 100 so that both transceivers see each other on their respective acquisition sensors.

Fig. 5 schematically shows three transceivers 100, 200, 300, wherein each transceiver comprises two transceiver units 105A, 105B, and a bi-directional optical link 50 is established between two neighboured transceivers. In particular, the first transceiver 100 comprises a first transceiver unit 105A and a second transceiver unit 105B. The first transceiver unit 105A of the first transceiver 100 establishes a bi-directional optical link 50 with the second transceiver unit 105B of the third transceiver 300. The second transceiver unit 105B of the first transceiver 100 establishes a bi-directional optical link 50 with the first transceiver unit 105A of the second transceiver 200. The first transceiver unit 105A of the third transceiver 300 establishes a bi-directional optical link 50 with the second transceiver unit 105B of the second transceiver 200, i.e., each transceiver receives signals from and transmits signals to two neighbours. This configuration may be referred to as closed chain configuration, as each transceiver has established two bi-directional optical links with two different other transceivers. Alternative configurations are possible, for example an open chain configuration, in which one of the shown optical links 50 is not established so that the two transceivers at the end of the chain have established only one optical link to one neighbour-transceiver. In other embodiments, the number of transceivers may be more than three transceivers. However, the same principles as outlined herein apply, independent of the number of transceivers. The transceivers 100, 200, 300 may all comprise similar or same transceiver units 105A, 105B.

In order to form transceiver chains as that shown in Fig. 5, the transceivers may implement certain functions and components:
a) Each transceiver may simultaneously steer the direction of both of its transmitted beams in two angular degrees of freedom independent of each other.
b) Each transceiver may have two acquisition sensors with a field of view that is at least twice as large as the uncertainty region defined by the pointing errors.
c) Each transceiver may be able to centre the field-of-view of its first acquisition sensor on the direction of its first transmitted beam and the field-of-view of its second acquisition sensor on the direction of its second transmitted beam.
d) The two acquisition sensors of each transceiver shall be able to measure the angular offset of the detected light from their respective pointing direction for the two angular degrees of freedom.

With two transceiver units 105A, 105B, the acquisition phase for establishing an optical link may be executed by performing the following steps and meet the following functional and structural requirements:
a) Each transceiver in the chain starts simultaneously or substantially at the same time scanning the uncertainty cones defining the area of uncertainty in angular space of the two neighbouring transceivers.
b) The scan follows a predetermined search pattern around the centre of the uncertainty cone.
c) The track width of the search pattern in the angular plane is chosen to be slightly smaller than the angular width of the optical beam. This gives full areal coverage of the uncertainty region and ensures that the transmitted beam "hits" the remote receiver at some point during the scan.
d) As soon as any of the transceivers detects a beam transmitted from one of the two neighbouring transceivers on its acquisition sensor, it stops its search scan and re-orients its acquisition sensor and transmitted beam to point towards the detected angular position of the received beam.
e) The neighbouring transceiver then detects the transmitted beam (from the transceiver that has just re-oriented itself) on its acquisition sensor, stops its search scan, and re-orients its acquisition sensor and transmitted beam to point towards the detected angular position of the received beam.
f) The optical links between one transceiver pair in the chain have now been acquired. At this point both transceivers see each other on their respective acquisition sensors.
g) The transceiver pair keeps scanning the uncertainty cone of its neighbours to which no link has been acquired yet. All other transceivers keep scanning the uncertainty cones of both their neighbours.
h) The process continues as specified at steps d) to g).
i) The acquisition of the full link chain is complete once each transceiver has established both links to its neighbours in the chain.

This approach is applied for a closed chain. For an open chain, the transceivers at each end of the chain build up only one link to one neighbour instead of two neighbours.

For example, in order to form a chain of interconnected transceivers, all transceivers may start or be engaged in the process of acquiring links to their neighbours in the chain at the same time. In the case of a transceiver chain with three transceivers this means that the first transceiver is acquiring a bi-directional link with the second transceiver and the third transceiver at the same time that the second transceiver is acquiring bi-directional optical links with the first and third transceivers and at the same time that the third transceiver is acquiring bidirectional optical links with the first and second transceivers. This is possible if each transceiver platform is equipped with two transceiver units and each transceiver unit acquires a bi-directional optical link with another transceiver unit from another transceiver platform, simultaneously for all transceiver units.

Fig. 6 shows a predetermined search pattern 114. The controller 150 controls the actuator 109 which moves the support element 107 so that the optical beam 112 follows the search pattern. In particular, the central axis 118 of the optical beam(s) 112 follows the indicated predetermined search pattern 114. The search pattern and the width of the optical beam 112 are designed so that the area covered by the optical beam 112 is larger than the distance between two neighbouring paths of the search pattern. As shown in Fig. 6, the optical beam 112 when following the outer track of the spiral 114 covers a certain area which is also partially covered by the optical beam 112 when it follows the adjacent inner track, so that an overlap 116 occurs. Thus, there is no uncovered area between the paths of the search pattern when the optical beam follows that path in order to detect a remote transceiver in the region that is defined by the search pattern and which corresponds to the region where the remote transceiver is assumed to be located.

Fig. 7 exemplarily shows an alternate search patter 114 which follows linear paths that are perpendicular with respect to each other.

Again with reference to Fig. 6 and Fig. 7, it is noted that the search pattern may be followed in either direction, i.e., from the inner end to the outer end or the opposite direction. It may be more favourable to follow the search pattern from the inner end to the outer end because the probability of finding the remote transceiver during the search scan is highest in the center of the uncertainty region.

Fig. 8 shows an optical data transmission system 1 with a ground station 10 and three transceivers 100, 200, 300. The ground station 10 is connected to each transceiver 100, 200, 300 via a wireless data link 15, for example an RF data link. The transceivers 100, 200, 300 may be satellites in an earth orbit or in a helical orbit. The ground station 10 utilizes the data links 15 to send data and/or commands to the transceivers 100, 200, 300. However, in order to directly transmit data between the transceivers without involving the ground station 10, the transceivers establish direct optical links 50 between each other in accordance with the principles set out herein. While Fig. 8 does not show a direct optical link between the second transceiver 200 and the third transceiver 300, it is noted that the multiple transceivers (two, three, more than three, actually any number of transceivers) may establish optical connections between each other in a closed chain or open chain configuration. It might even be contemplated that the transceivers in this or any other embodiment establish optical links in a network scheme between each other, i.e., each transceiver establishes an optical link to more than two or any other transceivers of the group of transceivers. However, the number of connections may be practically limited by the number of transceivers as each transceiver requires a separate beam emitting unit and acquisition sensor for each optical link.

The ground station 10 may be a mobile or stationary facility on earth. The transceivers 100, 200, 300 may follow an orbit around the earth, the sun, or any other celestial body.

The optical links 50 between the transceivers 100, 200, 300 may be used to directly transmit data between the transceivers or to determine the distance between the transceivers in order to periodically measure and transmit the relative position and distance between the transceivers for each optical link 50.

In addition, it should be noted out that "including" or "comprising" does not exclude other elements or steps and "a" or "an" does not exclude a multitude. It should also be noted that features or steps described with reference to one of the above embodiments can also be used in combination with other features or steps of other embodiments described above. Reference signs in the claims are not to be regarded or construed as a limitation.

### List of reference signs

- 1: optical data transmission system
- 10: ground station
- 15: RF data link
- 50: bi-directional optical link
- 100: first transceiver
- 105: transceiver unit
- 107: support element
- 109: actuator
- 110: beam emitting unit
- 112: optical beam
- 113: opening angle
- 114: search pattern
- 116: overlap of optical beam when passing adjacent paths of search pattern
- 118: central axis of optical beam
- 120: acquisition sensor
- 122: acquisition field-of-view
- 123: opening angle
- 128: central axis of acquisition range
- 150: controller
- 200: second transceiver
- 210: beam emitting unit
- 212: optical beam
- 220: acquisition sensor
- 222: acquisition field of view
- 250: controller
- 300: third transceiver

## Claims

1. A method for acquiring a bi-directional optical link between a first transceiver (100) and a second transceiver (200), wherein the first transceiver and the second transceiver are satellites, the method comprising the following steps:
activating a first beam emitting unit (110) of the first transceiver (100) and emitting a first optical beam (112) into a first direction;
varying the first direction in accordance with a predetermined first search pattern (114);
activating a second beam emitting unit (210) of the second transceiver (200) and emitting a second optical beam (212) into a second direction;
varying the second direction in accordance with a predetermined second search pattern;
acquiring, by a first acquisition sensor (120) that is associated with the first beam emitting unit (110), source coordinates of the second optical beam that is incident onto the first acquisition sensor (120);
varying the first direction of the first beam emitting unit (110) towards the source coordinates of the second optical beam and orienting the first acquisition sensor (120) towards the source coordinates of the second optical beam;
acquiring, by a second acquisition sensor (220) that is associated with the second beam emitting unit (210), source coordinates of the first optical beam that is incident onto the second acquisition sensor (220);
varying the second direction of the second beam emitting unit (210) towards the source coordinates of the first optical beam and orienting the second acquisition sensor (220) towards the source coordinates of the first optical beam;
wherein the first beam emitting unit (110) and the second beam emitting unit (210) emit the first optical beam (112) and the second optical beam (212) at least partially during a same period of time;
**characterized in that**
a field-of-view (122) covered by the first acquisition sensor (120) is at least twice as large as the uncertainty region in angular space where the second transceiver (200) is expected to be, and
a field-of-view (222) covered by the second acquisition sensor (220) is at least twice as large as the uncertainty region in angular space where the first transceiver (100) is expected to be,
wherein the uncertainty region for the first transceiver is defined by a combined contribution of all sources of pointing errors, namely the attitude error of a transmitter of the first transceiver, the error of the position in angular space of the second transceiver, an attitude error of the first transceiver, and an orientation error of the beam emitting unit of the first transceiver with respect to its nominal orientation within the first transceiver;
wherein the uncertainty region for the second transceiver is defined by a combined contribution of all sources of pointing errors, namely the attitude error of a transmitter of the second transceiver, the error of the position in angular space of the first transceiver;, an attitude error of the second transceiver, and an orientation error of the beam emitting unit of the second transceiver with respect to its nominal orientation within the second transceiver;
wherein the uncertainty region is defined as the region within which the respective remote transceiver is found with a probability of 3 Sigma (99,73%),
wherein, when the first direction of the first beam emitting unit (110) is varied, a center field-of-view (122) of the first acquisition sensor (120) is varied so that an optical axis defining the center field-of-view (128) of the first acquisition sensor (120) is parallel to a direction of the first optical beam (112), and
wherein, when the second direction of the second beam emitting unit (210) is varied, a center field-of-view (222) of the second acquisition sensor (220) is varied so that an optical axis defining the center field-of-view of the second acquisition sensor (220) is parallel to a direction of the second optical beam (212).

2. The method of claim 1,
wherein the first beam emitting unit (110) and the second beam emitting unit (210) are activated at the same time.

3. The method of any one of the preceding claims,
wherein the first search pattern (114) and the second search pattern are predetermined identical patterns.

4. The method of any one of the preceding claims,
wherein at least one of the first search pattern and the second search pattern are followed by the respective optical beam (112, 212) so that an area covered by the optical beam at a certain point when following the track of the search pattern (114) partially overlaps (116) with another area covered by the optical beam when following an adjacent track of the search pattern.

5. The method of any one of the preceding claims,
wherein the step of varying the first direction of emitting the first optical beam (112) and the second optical beam (212) comprises rotating the respective beam emitting unit (110, 210) about two rotational degrees of freedom.

6. The method of any one of the preceding claims,
wherein the first transceiver (100) and/or the second transceiver (200) comprises two distinct transceiver units (105), wherein each transceiver unit comprises a beam emitting unit (110, 210) and an associated acquisition sensor (120, 220);
wherein the method further comprises the step of:
independently varying the direction of the beam emitting units (110, 210) of the two transceiver units (105) to acquire two different optical links (50) to two different remote stations.

## Patentansprüche

1. Verfahren zum Akquirieren einer bi-direktionalen optischen Verbindung zwischen einem ersten Transceiver (100) und einem zweiten Transceiver (200), wobei der erste Transceiver und der zweite Transceiver Satelliten sind, wobei das Verfahren die folgenden Schritte umfasst:
Aktivieren einer ersten Strahlungsemissionseinheit (110) des ersten Transceivers (100) und Emittieren eines ersten optischen Strahls (112) in eine erste Richtung;
Variieren der ersten Richtung gemäß einem vorgegebenen ersten Suchmuster (114);
Aktivieren einer zweiten Strahlungsemissionseinheit (210) des zweiten Transceivers (200) und Emittieren eines zweiten optischen Strahls (212) in eine zweite Richtung;
Variieren der zweiten Richtung gemäß einem vorgegebenen zweiten Suchmuster;
Akquirieren, durch einen ersten Akquisitionssensor (120), der der ersten Strahlungsemissionseinheit (110) zugeordnet ist, von Quellkoordinaten des zweiten optischen Strahls, der auf den ersten Akquisitionssensor (120) auftrifft;
Variieren der ersten Richtung der ersten Strahlungsemissionseinheit (110) in Richtung der Quellkoordinaten des zweiten optischen Strahls und Ausrichten des ersten Akquisitionssensors (120) auf die Quellkoordinaten des zweiten optischen Strahls;
Akquirieren, durch einen zweiten Akquisitionssensor (220), der der zweiten Strahlungsemissionseinheit (210) zugeordnet ist, von Quellkoordinaten des ersten optischen Strahls, der auf den zweiten Akquisitionssensor (220) auftrifft;
Variieren der zweiten Richtung der zweiten Strahlungsemissionseinheit (210) in Richtung der Quellkoordinaten des ersten optischen Strahls und Ausrichten des zweiten Akquisitionssensors (220) auf die Quellkoordinaten des ersten optischen Strahls; wobei die erste Strahlungsemissionseinheit (110) und die zweite Strahlungsemissionseinheit (210) den ersten optischen Strahl (112) und den zweiten optischen Strahl (212) zumindest teilweise während eines selben Zeitraums emittieren;
**dadurch gekennzeichnet, dass** ein durch den ersten Akquisitionssensor (120) abgedecktes Sichtfeld (122) mindestens doppelt so groß ist wie der Unsicherheitsbereich im Winkelraum, in dem der zweite Transceiver (200) erwartet wird, und
ein durch den zweiten Akquisitionssensor (220) abgedecktes Sichtfeld (222) mindestens doppelt so groß ist wie der Unsicherheitsbereich im Winkelraum, in dem der erste Transceiver (100) erwartet wird,
wobei der Unsicherheitsbereich für den ersten Transceiver durch einen kombinierten Beitrag aller Ausrichtungsfehlerquellen definiert ist, nämlich den Lagefehler eines Senders des ersten Transceivers, den Fehler der Position im Winkelraum des zweiten Transceivers, einen Lagefehler des ersten Transceivers und einen Orientierungsfehler der Strahlungsemissionseinheit des ersten Transceivers in Bezug auf ihre Nominalorientierung innerhalb des ersten Transceivers;
wobei der Unsicherheitsbereich für den zweiten Transceiver durch einen kombinierten Beitrag aller Ausrichtungsfehlerquellen definiert ist, nämlich den Lagefehler eines Senders des zweiten Transceivers, den Fehler der Position im Winkelraum des ersten Transceivers, einen Lagefehler des zweiten Transceivers und einen Orientierungsfehler der Strahlungsemissionseinheit des zweiten Transceivers in Bezug auf ihre Nominalorientierung innerhalb des zweiten Transceivers;
wobei der Unsicherheitsbereich als der Bereich definiert ist, innerhalb dessen der jeweilige entfernte Transceiver mit einer Wahrscheinlichkeit von 3 Sigma (99,73 %) vorgefunden wird,
wobei, wenn die erste Richtung der ersten Strahlungsemissionseinheit (110) variiert wird, ein zentrales Sichtfeld (122) des ersten Akquisitionssensors (120) variiert wird, so dass eine optische Achse, die das zentrale Sichtfeld (128) des ersten Akquisitionssensors (120) definiert, parallel zu einer Richtung des ersten optischen Strahls (112) verläuft, und
wobei, wenn die zweite Richtung der zweiten Strahlungsemissionseinheit (210) variiert wird, ein zentrales Sichtfeld (222) des zweiten Akquisitionssensors (220) variiert wird, so dass eine optische Achse, die das zentrale Sichtfeld des zweiten Akquisitionssensors (220) definiert, parallel zu einer Richtung des zweiten optischen Strahls (212) verläuft.

2. Verfahren nach Anspruch 1,
wobei die erste Strahlungsemissionseinheit (110) und die zweite Strahlungsemissionseinheit (210) gleichzeitig aktiviert werden.

3. Verfahren nach einem der vorhergehenden Ansprüche,
wobei das erste Suchmuster (114) und das zweite Suchmuster vorgegebene identische Muster sind.

4. Verfahren nach einem der vorhergehenden Ansprüche,
wobei mindestens einem von dem ersten Suchmuster und dem zweiten Suchmuster durch den jeweiligen optischen Strahl (112, 212) so gefolgt wird, dass eine durch den optischen Strahl an einem bestimmten Punkt beim Folgen der Spur des Suchmusters (114) abgedeckte Fläche sich teilweise mit einer anderen Fläche überschneidet (116), die durch den optischen Strahl beim Folgen einer benachbarten Spur des Suchmusters abgedeckt wird.

5. Verfahren nach einem der vorhergehenden Ansprüche,
wobei der Schritt des Variierens der ersten Richtung des Emittierens des ersten optischen Strahls (112) und des zweiten optischen Strahls (212) das Drehen der jeweiligen Strahlungsemissionseinheit (110, 210) um zwei Rotationsfreiheitsgrade umfasst.

6. Verfahren nach einem der vorhergehenden Ansprüche,
wobei der erste Transceiver (100) und/oder der zweite Transceiver (200) zwei verschiedene Transceiver-Einheiten (105) umfasst, wobei jede Transceiver-Einheit eine Strahlungsemissionseinheit (110, 210) und einen zugeordneten Akquisitionssensor (120, 220) umfasst;
wobei das Verfahren ferner den folgenden Schritt umfasst:
unabhängiges Variieren der Richtung der Strahlungsemissionseinheiten (110, 210) der zwei Transceiver-Einheiten (105), um zwei verschiedene optische Verbindungen (50) zu zwei verschiedenen Gegenstationen zu akquirieren.

## Revendications

1. Procédé d'acquisition d'une liaison optique bidirectionnelle entre un premier émetteur-récepteur (100) et un second émetteur-récepteur (200), le premier émetteur-récepteur et le second émetteur-récepteur étant des satellites, le procédé comprenant les étapes suivantes:
activer une première unité d'émission de faisceau (110) du premier émetteur-récepteur (100) et émettre un premier faisceau optique (112) dans une première direction;
faire varier la première direction selon un premier motif de recherche prédéterminé (114);
activer une seconde unité d'émission de faisceau (210) du second émetteur-récepteur (200) et émettre un second faisceau optique (212) dans une seconde direction;
faire varier la seconde direction selon un second motif de recherche prédéterminé; acquérir, par un premier capteur d'acquisition (120) associé à la première unité d'émission de faisceau (110), des coordonnées de source du second faisceau optique incident sur le premier capteur d'acquisition (120);
faire varier la première direction de la première unité d'émission de faisceau (110) vers les coordonnées de source du second faisceau optique et orienter le premier capteur d'acquisition (120) vers les coordonnées de source du second faisceau optique;
acquérir, par un second capteur d'acquisition (220) associé à la seconde unité d'émission de faisceau (210), des coordonnées de source du premier faisceau optique incident sur le second capteur d'acquisition (220);
faire varier la seconde direction de la seconde unité d'émission de faisceau (210) vers les coordonnées de source du premier faisceau optique et orienter le second capteur d'acquisition (220) vers les coordonnées de source du premier faisceau optique;
dans lequel la première unité d'émission de faisceau (110) et la seconde unité d'émission de faisceau (210) émettent le premier faisceau optique (112) et le second faisceau optique (212) au moins partiellement pendant une même période de temps;
**caractérisé en ce que**
un champ de vision (122) couvert par le premier capteur d'acquisition (120) est au moins deux fois plus grand que la région d'incertitude dans l'espace angulaire où le second émetteur-récepteur (200) est censé se trouver, et
un champ de vision (222) couvert par le second capteur d'acquisition (220) est au moins deux fois plus grand que la région d'incertitude dans l'espace angulaire où le premier émetteur-récepteur (100) est censé se trouver,
dans lequel la région d'incertitude pour le premier émetteur-récepteur est définie par une contribution combinée de toutes les sources d'erreurs de pointage, à savoir l'erreur d'attitude d'un émetteur du premier émetteur-récepteur, l'erreur de position dans l'espace angulaire du second émetteur-récepteur, une erreur d'attitude du premier émetteur-récepteur, et une erreur d'orientation de l'unité d'émission de faisceau du premier émetteur-récepteur par rapport à son orientation nominale au sein du premier émetteur-récepteur;
dans lequel la région d'incertitude pour le second émetteur-récepteur est définie par une contribution combinée de toutes les sources d'erreurs de pointage, à savoir l'erreur d'attitude d'un émetteur du second émetteur-récepteur, l'erreur de position dans l'espace angulaire du premier émetteur-récepteur, une erreur d'attitude du second émetteur-récepteur, et une erreur d'orientation de l'unité d'émission de faisceau du second émetteur-récepteur par rapport à son orientation nominale au sein du second émetteur-récepteur;
dans lequel la région d'incertitude est définie comme la région à l'intérieur de laquelle l'émetteur-récepteur distant respectif se trouve avec une probabilité de 3 Sigma (99,73 %),
dans lequel, lorsque la première direction de la première unité d'émission de faisceau (110) varie, un champ de vision central (122) du premier capteur d'acquisition (120) varie de sorte qu'un axe optique définissant le champ de vision central (128) du premier capteur d'acquisition (120) est parallèle à une direction du premier faisceau optique (112), et
dans lequel, lorsque la seconde direction de la seconde unité d'émission de faisceau (210) varie, un champ de vision central (222) du second capteur d'acquisition (220) varie de sorte qu'un axe optique définissant le champ de vision central du second capteur d'acquisition (220) est parallèle à une direction du second faisceau optique (212).

2. Procédé selon la revendication 1,
dans lequel la première unité d'émission de faisceau (110) et la seconde unité d'émission de faisceau (210) sont activées en même temps.

3. Procédé selon l'une quelconque des revendications précédentes,
dans lequel le premier motif de recherche (114) et le second motif de recherche sont des motifs identiques prédéterminés.

4. Procédé selon l'une quelconque des revendications précédentes,
dans lequel au moins un parmi le premier motif de recherche et le second motif de recherche est suivi par le faisceau optique respectif (112, 212) de sorte qu'une zone couverte par le faisceau optique à un certain point lors du suivi de la trajectoire du motif de recherche (114) chevauche partiellement (116) une autre zone couverte par le faisceau optique lors du suivi d'une trajectoire adjacente du motif de recherche.

5. Procédé selon l'une quelconque des revendications précédentes,
dans lequel l'étape consistant à faire varier la première direction d'émission du premier faisceau optique (112) et du second faisceau optique (212) comprend la rotation de l'unité d'émission de faisceau respective (110, 210) selon deux degrés de liberté en rotation.

6. Procédé selon l'une quelconque des revendications précédentes,
dans lequel le premier émetteur-récepteur (100) et/ou le second émetteur-récepteur (200) comprend deux unités d'émetteur-récepteur distinctes (105), chaque unité d'émetteur-récepteur comprenant une unité d'émission de faisceau (110, 210) et un capteur d'acquisition associé (120, 220);
1.le procédé comprenant en outre l'étape consistant à:
faire varier indépendamment la direction des unités d'émission de faisceau (110, 210) des deux unités d'émetteur-récepteur (105) pour acquérir deux liaisons optiques différentes (50) vers deux stations distantes différentes.
